# EUROPÄISCHE PATENTANMELDUNG

(11) **EP 1 209 210 A2**
(43) Veröffentlichungstag der Anmeldung: **29.05.2002**
(21) Anmeldenummer: 01126757.2
(22) Anmeldetag: 09.11.2001
(51) Int. Cl.: C09J 11/04

(54) **Calziumaluminiumsulfat enthaltender Klebstoff**

(30) Priorität: 28.11.2000 DE 10058983; 23.01.2001 DE 10102968
(71) Anmelder: BASF AKTIENGESELLSCHAFT, 67056 Ludwigshafen (DE); Rethmann Lippewerk GmbH, 44536 Lünen (DE)
(72) Erfinder: Denu, Hans-Jürgen, 67159 Friedelsheim (DE); Pakusch, Joachim, Dr., 67346 Speyer (DE); Sandor, Mario, Dr., 67283 Obrigheim (DE); Gulden, Rolf, 67227 Frankenthal (DE); Seibert, Horst, 67136 Fussgönheim (DE); Anders, Hermann, 67149 Meckenheim (DE); Bings, Hubert, 44532 Lünen (DE); Fendel, Ansgar, 44141 Dortmund (DE); Lehmkuhl, Josef, 45721 Haltern (DE)

(57) **Zusammenfassung**

Verwendung einer wäßrigen Zusammensetzung als Klebstoff, dadurch gekennzeichnet, dass die Zusammensetzung ein polymeres Bindemittel und Calziumaluminiumsulfat als Füllstoff enthält.

## Beschreibung

Die Erfindung betrifft die Verwendung einer wäßrigen Zusammensetzung als Klebstoff, dadurch gekennzeichnet, dass die Zusammensetzung ein polymeres Bindemittel und Calziumaluminiumsulfat als Füllstoff enthält.

Insbesondere betrifft die Erfindung die Verwendung der Zusammensetzung als Klebstoff für keramische Fliesen und flexible Bodenbeläge.

Klebstoffe für keramische Fliesen enthalten üblicherweise ein polymeres Bindemittel und Füllstoffe. Keramische Fliesen werden häufig in Feuchträumen, z.B. Bädern verlegt. Daher ist eine Beständigkeit der Verklebung gegen Wassereinwirkung von besonderer Bedeutung.

Aus EP-A-35332 und EP-A-366969 ist bekannt, das polymere Bindemittel mit einem Gehalt an hydrolysierbaren Siliziumgruppen eine Verbesserung der Wasserbeständigkeit bewirken.

Calziumaluminiumsulfate sind in WO 97/35807 beschrieben und werden für verschiedene Anwendungen als Zusatzmittel empfohlen.

Aufgabe der vorliegenden Erfindung waren Klebstoffe, insbesondere Klebstoffe für keramische Fliesen, welche Verklebungen mit hoher Wasserbeständigkeit und dauerhaft guten mechanischen Eigenschaften wie Haftung, Festigkeit, Elastizität, Wämestandfestigkeit ergeben. Außerdem sollen die Klebstoffe eine lange offene Zeit haben.

Demgemäß wurde die eingangs definierte Verwendung gefunden.

Bei dem polymeren Bindemittel in der Zusammensetzung kann es sich um Polykondensate, z.B. Polyester oder Polyaddukte, z.B. Polyurethane oder vorzugsweise um Polymere, welche durch radikalische oder ionische Polymerisation von ethylenisch ungesättigten Verbindungen (Monomere) erhältlich sind (kurz: Polymere), handeln.

Das polymere Bindemittel liegt vorzugsweise in Form einer wäßrigen Dispersion vor. Insbesondere handelt es sich bei dem polymeren Bindemittel um eine wäßrige Polymerdispersion, wie sie durch Emulsionspolymerisation von Monomeren erhältlich ist.

Vorzugsweise besteht das Polymer zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt, mit einer Doppelbindung z.B. Ethylen oder Propylen.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das radikalisch polymerisierte Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl (meth)acrylate, (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl- (meth-)acrylat genannt.

Als weitere Monomere seien auch vernetzende Monomere genannt.

Weiterhin seien auch Monomere mit hydrolisierbaren Si-Gruppen genannt.

Die Herstellung der Polymere erfolgt in einer bevorzugten Ausführungsform durch Emulsionspolymerisation, es handelt sich daher um ein Emulsionspolymerisat.

Die Herstellung kann jedoch z. B. auch durch Lösungspolymerisation und anschließende Dispergierung in Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 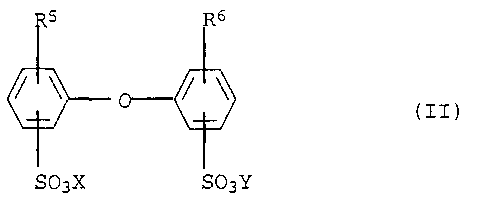 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan® NP 50, Dextrol® OC 50, Emulgator 825, Emulgator 825 S, Emulan® OG, Texapon®NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bioder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/ neuer Teilchengeneration/en kann zu einem beliebigen Zeitpunkt erfolgen. Er richtet sich nach den für eine niedrige Viskosität angestrebten Teilchengrößenverteilung.

Das so hergestellte Polymer wird vorzugsweise in Form seiner wäßrigen Dispersion verwendet.

Die Glasübergangstemperatur des polymeren Bindemittels, bzw. des Emulsionspolymerisats beträgt vorzugsweise -60 bis +40°C, besonders bevorzugt -30 bis +30°C und ganz besonders bevorzugt -10 bis +20°C.

Die Glasübergangstemperatur läßt sich nach üblichen Methoden wie Differentialthermoanalyse oder Differentail Scanning Calorimetrie (s. z.B. ASTM 3418/82, sog. "midpoint temperature") bestimmen.

Die Zusammensetzung enthält neben dem polymeren Bindemittel Calziumaluminiumsulfat als Füllstoff. Bei dem Calziumaluminiumsulfat handelt es sich vorzugsweise um Verbindungen der Formel

x CaO · y Al₂O₃ · z CaSO₄ · w H₂O

worin die Variablen jeweils für ganze oder gebrochene Zahlen mit folgenden Bereichen stehen:
x = 2 bis 4 z = 3 bis 4
y = 1 bis 2 w = 25 - 35

In der Natur kommt Calziumaluminiumsulfat als Ettringit vor.

Ettringit ist ein bevorzugtes Calziumaluminiumsulfat.

Calziumaluminiumsulfate können auch synthetisch durch Fällung aus wäßrigen Lösungen oder Suspensionen erhalten werden.

Derartige Fällverfahren sind z.B. in WO 97/35807 oder EP-584502 beschrieben. Geeignete Calziumaluminiumsulfate werden von der Firma Rethmann Lippewerk GmbH unter dem Namen Casul vermarktet.

Die wäßrige Zusammensetzung kann neben Calziumaluminiumsulfat weitere Füllstoffe enthalten. Genannt seien z.B. Aluminiumsilikate, Quarze, gefällte oder pyrogene Kieselsäure, Leicht- und Schweropal, Talcum, Dolomit und bevorzugt Calziumcarbonat.

Der Gewichtsanteil der Füllstoffe insgesamt beträgt vorzugsweise 50 bis 2000 Gewichtsteile, bezogen aus 100 Gew.-Teile polymeres Bindemittel (fest). Besonders bevorzugt beträgt der Gewichtsanteil der Füllstoffe insgesamt 100 bis 2000 Gew.-Teile, ganz besonders bevorzugt 200 bis 1500 Gew.-Teile, bezogen auf 100 Gew.-Teile polymeres Bindemittel (fest).

Bei der gesamten Füllmenge in der wäßrigen Zusammensetzung kann es sich um Calziumaluminiumsulfat handeln. Eine deutliche Verbesserung der Beständigkeit der Verklebungen wird jedoch schon mit einem Anteil von mindestens 0,5 Gew.-% insbesondere mindestens 2 Gew.-%, ganz besonders bevorzugt mindestens 5 Gew.-%, bezogen auf die gesamte Füllstoffmenge erreicht.

Der Anteil der Calziumaluminiumsulfate an der Gesamtmenge der Füllstoffe kann demnach z.B. 0,5 bis 100 Gew,-%, besonders bevorzugt 2 bis 50 Gew.-% bzw. 5 bis 20 Gew.-% betragen.

Ein Anteil des Calziumaluminiumsulfats von mehr als 50 Gew.-% ist im allgemeinen nicht notwendig.

Die Zusammensetzung kann weitere Hilfsmittel für die Verwendung als Klebstoff erhalten z.B. Weichmacher, Verlaufmittel, Verdicker oder Tackifier.

Die Zusammensetzung kann auch hydrolisierbare Siliziumverbindungen enthalten, die eine gute Wasserbeständigkeit in Verklebungen bewirken. Derartige Siliziumverbindungen können an das polymere Bindemittel schon bei der Herstellung gebunden sein (z.B. durch copolymerisierbare Trialkoxysilane mit einer ungesättigten Doppelbindung sowie regelnde Trialkoxysilane mit einer Mercaptogruppe) oder auch der Polymerdispersion separat als Additiv zugesetzt werden. Bekannte Additive sind z.B. Epoxysilane der Firma Witco.

Es ist jedoch ein Vorteil der Erfindung, dass gute Wasserbeständigkeiten gänzlich ohne hydrolisierbare Siliziumverbindungen erreicht werden.

Die Zusammensetzung kann in einfacher Weis durch Mischen der Bestandteile hergestellt werden. Dabei ist es vorteilhaft, zunächst eine Mischung aus der Polymerdispersion und Calziumaluminiumsulfat herzustellen und diese dann mit weiteren Additiven, auch Füllstoffen zu mischen.

Die Zusammensetzung wird als Klebstoff verwendet.

Insbesondere eignet sie sich als Klebstoff zum Verkleben von mineralischen bzw. keramischen Gegenständen, insbesondere von keramischen Fliesen.

Die Fliesen werden z.B. auf Böden verlegt oder dienen als Wandbelag.

Die Zusammensetzung eignet sich auch zum Verkleben von flexiblen Bodenbelägen auf Untergründen, z.B. aus Holz, Kunststoff oder insbesondere mineralischen Untergründen, wie Estrich oder Beton.

Die wäßrige Zusammensetzung eignet sich als Fußbodenkleber für Teppichböden oder sonstige Bodenbeläge z.B. aus PVC (in Ausführungen als Mehrschichtbeläge oder Homogenbeläge), Schaumstoffbeläge mit Textilunterseite (z.B. Jute), Polyestervlies, Gummibeläge, Textilbeläge, z.B. auch mit unterschiedlicher Rückenausstattung (wie Polyurethanschaum, Styrol-Butadien-Schaum, textiler Zweitrücken), Nadelfilzbodenbeläge, Polyolefinbeläge oder Linoleumbeläge, auf Untergründen wie Holz, Estrich, Beton, keramische Fliesen, Metalluntergründe oder ähnliches.

Der Kleber kann z.B. mit einer Zahnleiste auf den Untergrund aufgetragen werden. Nach dem üblichen Ablüften wird der Bodenbelag eingelegt.

Der erfindungsgemäße Klebstoff ergibt wärme- und wasserbeständige Verklebungen mit langer offener Zeit und eignet sich daher insbesondere für Fliesen oder Bodenbeläge in Feuchträumen, z.B. Bädern.

### Beispiele

### A) Herstellung einer Polymerdispersion

Es wurde zunächst unter Rühren eine Monomerenemulsion (=Zulauf 1) aus folgenden Komponenten hergestellt:

| Menge (g) | Einsatzstoff |
|---|---|
| 135,0 | Wasser |
| 10,1 | Dowfax 241 (CAS-Nr. 12626-49-2; 45 Gew.-%ig in Wasser |
| 37,4 | Ethoxylierter Talgfettalkohol (EO-Grad 18; 20 Gew.-%ig in Wasser) |
| 27,7 | Natriumlaurylsulfat (15 Gew.-%ig in Wasser) |
| 10,0 | Acrylamid (50 Gew.-%ig in Wasser) |
| 13,5 | Methacrylsäure |
| 140,4 | Styrol |
| 50,1 | Methylmethacrylat |
| 37,2 | n-Butylacrylat |

### Zulauf 2: Lösung von 2,6 g Natriumperoxisulfat in 34,5 g Wasser.

In einem Reaktionsgefäß wurde daraufhin bei Raumtemperatur ein Gemisch aus 200 g Wasser und 15,8 g eines Saatlatex mit einer Teilchengröße von 30 mm (der Feststoffgehalt des Saatlatex betrug 33 Gew.-% in Wasser) vorgelegt und unter Rühren auf 90°C erhitzt. Anschließend wurden zu diesem Gemisch zeitgleich beginnend und unter Aufrechterhaltung der Innentemperatur von 90°C in 150 min der Zulauf 1 und der Zulauf 2 kontinuierlich zudosiert. Danach wurde das Reaktionsgemisch noch 30 min bei 90°C gerührt und auf 70°C abgekühlt. Nach Zugabe einer Lösung von 0,7 g t-Butylhydroperoxyd in 5 g Wasser wurde bei dieser Temperatur innerhalb von 1 h eine Lösung von 3,0 g Acetonbisulfid in 28,2 g Wasser zugegeben. Nach Abkühlen auf Raumtemperatur wurde mit 25,5 g Natronlauge (10 Gew.-% in Wasser) neutralisiert und über ein 200-µm-Sieb filtriert. Der Feststoffgehalt der Dispersion betrug 51,5 Gew.-%, die Lichtdurchlässigkeit der 0,01 Gew.-%igen Dispersion bei 20°C und einer Schichtdicke von 2,5 cm ("LD-Wert") 76 % und der pH-Wert 7,8.

### B) Herstellung der Klebstoffmischungen

Die in der nachfolgenden Tabelle angegebenen Bestandteile wurden gemischt:

| Beispiel | I | II | III | IV |
|---|---|---|---|---|
| Wasser | 69 | 69 | 69 | 69 |
| Walocel® MW 40000 PFV (Celluloseether) | 5 | 5 | 5 | 5 |
| Lumitel EL (Entschäumer) | 1 | 1 | 1 | 1 |
| Dispersion aus A | 200 | 200 | 200 | 200 |
| Witco Y 15078¹ | | | | 1 |
| Calciumaluminiumsulfat² | - | 36 | 72 | 72 |
| Omyacarb® 40 (Kreide)³ | 428 | 410 | 392 | 392 |
| Omyacarb® 130 (Kreide)³ | 297 | 279 | 261 | 261 |

| | | | | |
|---|---|---|---|---|
| ¹ Epoxydiertes Silan | | | | |
| ²Casul® der Firma Rethmann | | | | |
| ³Gewichts-mittlerer Teilchendurchmesser 40 bzw. 130 µm | | | | |

### C) Anwendungstechnische Prüfung

Die Prüfung der Scherfesigkeit erfolgte nach DIN EN 1324 nach der in der Tabelle angegebenen Lagerzeit in Tagen (d) im Normklima (23°C, 50 % relative Luftfeuchtigkeit), bei 70°C und/oder in Wasser bei 23°C.

Die Prüfung der offenen Zeit erfolgte nach DIN EN 1346 durch Messung der Haftzugfestigkeiten nach verschiedenen Ablüftzeiten des Klebstoffs vor der Verklebung.

| Beispiele | I | II | III | IV |
|---|---|---|---|---|
| Scherfestigkeiten N/mm² nach: | | | | |
| 14 d Normklima | 2,2 | 2,6 | 3,9 | 4,0 |
| 7 d Normklima + 7 d Wasser | auseinander gefallen | 0,3 | 0,6 | 0,7 |
| 14 d Normklima + 14 d 70°C + 1 d NK | 1,4 | 2,4 | 3,2 | 3,8 |
| | | | | |

| Haftzugfestigkeiten in N/mm², Verklebung nach: | | | | |
|---|---|---|---|---|
| 5 min | 0,8 | 1,6 | 1,7 | 2,3 |
| 10 min | 0,5 | 0,9 | 1,1 | 1,8 |
| 20 min | <0,1 | 0,7 | 0,9 | 1,2 |
| 30 min | <0,1 | 0,3 | 0,6 | 1,1 |

## Patentansprüche

1. Verwendung einer wäßrigen Zusammensetzung als Klebstoff, **dadurch gekennzeichnet, dass** die Zusammensetzung ein polymeres Bindemittel und Calziumaluminiumsulfat als Füllstoff enthält.

2. Verwendung gemäß Anspruch 1, **dadurch gekennzeichnet, dass** das polymere Bindemittel in Form einer wäßriger Polymerdispersion vorliegt.

3. Verwendung gemäß einem der Ansprüche 1 bis 3, **dadurch gekennzeichnet, dass** es sich bei dem polymeren Bindemittel um ein Polymer handelt, welches zu mindestens 40 Gew.-% aus sogenannten Hauptmonomeren, ausgewählt aus C₁ bis C₂₀ Alkyl(meth)acrylaten, Vinylestern mit bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren aufgebaut ist.

4. Verwendung gemäß Anspruch 3, **dadurch gekennzeichnet, dass** das Calziumaluminiumsulfat die Summenformel
xCaO · yAl₂O₃ · zCaSO₄ · wH₂O
aufweist, wobei
X = 2-4, y = 1-2, z = 3-4 und w = 25-35 ist.

5. Verwendung gemäß einem der Ansprüche 1 bis 4, **dadurch gekennzeichnet, dass** die Zusammensetzung insgesamt 50 bis 2000 Gewichtsteile Füllstoff auf 100 Gewichtsteile polymeres Bindemittel enthält.

6. Verwendung gemäß einem der Ansprüche 1 bis 5, **dadurch gekennzeichnet, dass** der Anteil des Calziumaluminiumsulfat an der gesamten Füllstoffmenge 0,5 bis 100 Gew.-% beträgt.

7. Verwendung der Zusammensetzung gemäß einem der Ansprüche 1 bis 6 als Klebstoff für keramische Fliesen.

8. Verwendung der Zusammensetzung gemäß einem der Anspüche 1 bis 6 als Klebstoff für flexible Bodenbeläge.
